# EUROPEAN PATENT SPECIFICATION

(11) **EP 1 551 034 B1**
(45) Date of publication and mention of the grant of the patent: **13.03.2013**
(21) Application number: 04258062.1
(22) Date of filing: 22.12.2004
(51) Int. Cl.: G21C 3/328

(54) **Axially segregated part-length fuel rods in a reactor fuel bundle**
Achsial abgesetzte teillange Brennstäbe in einem Reaktorbrennstabbündel
Crayons de combustible à longeur partielle axiale dans un assemblage de combustible d'un réacteur

(30) Priority: 31.12.2003 US 748175
(43) Date of publication of application: 06.07.2005
(73) Proprietor: Global Nuclear Fuel-Americas, LLC, Wilmington, North Carolina 28401 (US); Global Nuclear Fuel-Japan Co., Ltd., Tokyo 105 (JP)
(72) Inventor: Trosman, Lukas, Wilmington, North Carolina 28403 (US); Kunz, Cary L., Wilmington, North Carolina 28411 (US); Stachowski, Russell E., Wilmington, North Carolina 28409 (US); Fawcett, Russell M., Atkinson, North Carolina 28421 (US); Fujimaki, Shingo, Yokyohama-Shi (JP); Goto, Daisuke, Kamakura-shi 247-0073 (JP)
(74) Representative: Cleary, Fidelma

(56) References cited:
- WO-A-97/42634
- JP-A- 2 002 977
- JP-A- 6 003 473
- US-A- 4 968 479
- US-A- 6 061 416
- DATABASE WPI Week 198827 Derwent Publications Ltd., London, GB; AN 1988-188167 XP002478062 & JP 63 127190 A (TOSHIBA ENG CO) 31 May 1988 (1988-05-31)

## Description

The present invention relates in general to disposing varying length fuel rods in a fuel bundle.

Fuel bundles for boiling water reactors typically each provide a plurality of vertically upstanding fuel rods. Common fuel bundles or fuel assemblies provide a square or rectangular shaped perimeter wall called a channel within which the fuel rods are positioned. Reactor coolant flowing through the boiling water reactor enters the bottom of the channel and passes vertically upward and longitudinally over the fuel rods where it is heated to form steam. The steam discharges from upper openings in the fuel bundle. Boiling water reactors may contain several hundred fuel bundles. One or more water conduits are also commonly provided within each fuel bundle to maintain a source of water to slow down a sufficient quantity of neutrons to maintain reactor criticality.

The highest potential operating energy for a boiling water reactor is obtained if all fuel rods are full-length fuel rods. The disadvantage of using 100% full-length fuel rods is that reactor shut-down margin is not optimized. Following a reactor shut-down using control blades, fission does not immediately stop. Neutrons continue to be produced by fission, and it is necessary to trap sufficient neutrons to prevent inadvertent reactor criticality. Shut-down margin is therefore a sufficient percentage of trapped neutrons compared to neutrons produced by fission which prevents criticality. Shut-down margin is commonly enhanced by distributing a quantity of part-length fuel rods in each fuel bundle. A vacant volume above each part-length fuel rod provides an additional water volume when the reactor is shut down. These additional water volumes trap neutrons to provide increased shut-down margin for the reactor.

Common fuel bundle designs group all of the part-length rods adjacent to the interior fluid passage(s). Several common designs distribute part-length fuel rods in single lengths, within an outer ring of full-length fuel rods. It is also known to distribute two lengths of part-length fuel rods, having short-length fuel rods positioned in each corner of the channel, and intermediate-length fuel rods arranged generally about the interior water passage(s).

Fuel assemblies for boiling water reactors including full-length rods, intermediate-length rods, and short-length rods are known e.g. from US4968479, JP02002977, or JP63127190.

The known configurations of part-length fuel rods in a fuel bundle therefore do not achieve the optimum combination of thermal hydraulic performance (e.g., critical power ratio) and shut-down margin.

The present invention provides a fuel assembly according to claim 1.

The use of part-length fuel rods improves shut-down margin. Separating the part-length rods into two groups retains overall fuel mass while distributing fuel less uniformly throughout the fuel bundle. The outer periphery of the fuel bundle is the most desirable location to position full-length fuel rods. By locating the intermediate-length rods immediately adjacent to the inner perimeter wall and the short-length rods toward the inner region of the channel, shut-down margin is improved by flattening a cold axial neutron flux peak, without removing excessive fuel from the desirable outer periphery of the fuel bundle.

Locating intermediate-length fuel rods immediately adjacent to the inner perimeter wall locally provides a water volume during shutdown conditions. This provides for increased capture (i.e., trapping) of neutrons to improve shut-down margin. This local water volume is further increased in an exemplary embodiment by grouping the intermediate-length fuel rods in pairs. The detrimental effect of fuel loss in this desirable fuel location is reduced by removing less than half of the fuel from a full-length fuel rod to form each intermediate-length fuel rod.

To retain the overall mass of fuel while providing sufficient void volume for shut-down water traps, the greatest fuel reduction area (and therefore the greatest void volume to form water traps) is shifted to the channel inner region by positioning the short-length fuel rods therein.

Further areas of applicability of the present invention will become apparent from the detailed description provided hereinafter. It should be understood that the detailed description and specific examples, while indicating several exemplary embodiments of the invention, are intended for purposes of illustration only and are not intended to limit the scope of the invention.

The present invention will become more fully understood from the detailed description and the accompanying drawings, wherein:
Figure 1 is a partial sectioned elevation view of a fuel bundle of the present invention;
Figure 2 is a sectional view taken at Section 2-2 of Figure 1 identifying a preferred embodiment for the part-length rods of the present invention;
Figure 3 is a sectional view taken at Section 3-3 of Figure 1 identifying the void regions about the water conduits and above the location of the short-length rods of the present invention;
Figure 4 is a sectional view taken at Section 4-4 of Figure 1 identifying both the voids above the short-length rods and the intermediate-length rods of the present invention and the overall water trap areas formed thereby; and
Figure 5 is a sectional view similar to Figure 2 showing another embodiment having an odd-numbered configuration of fuel rods in a row-and-column configuration.

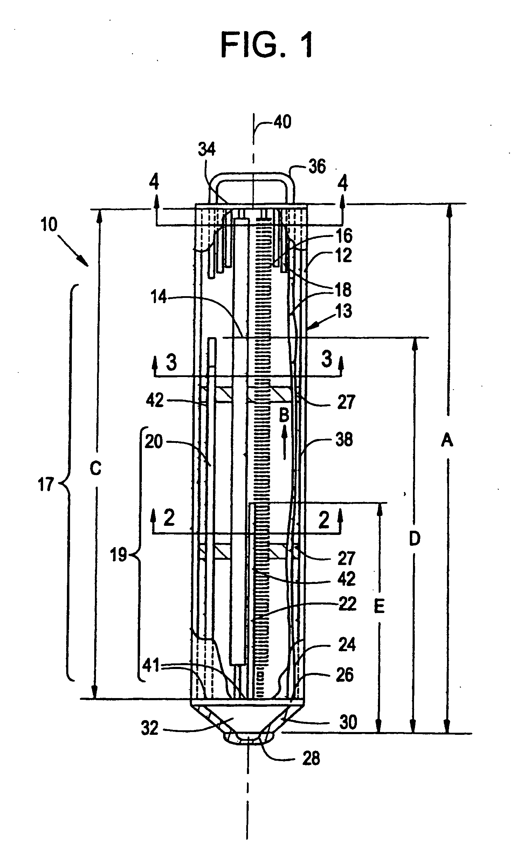

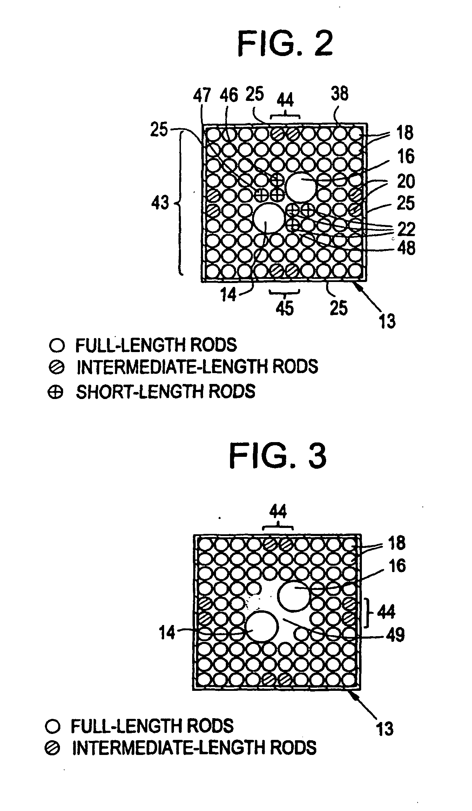

Referring to Figure 1, a fuel bundle 10 of the present invention is shown. The fuel bundle 10 includes a channel 12, generally formed as a square-shaped tube 13 (best seen in reference to Figures 2-4), having a first water conduit 14 and a second water conduit 16 each disposed throughout a total length A of the channel 12. A plurality of fuel rods 17 includes a plurality of full-length fuel rods 18 and a plurality of part-length fuel rods 19. The plurality of part-length fuel rods 19 is further divisible into a plurality of intermediate-length fuel-rods 20, and a plurality of short-length fuel rods 22. Full-length fuel rods 18 are partially shown in the upper area of the fuel bundle 10. The lower portions of the full-length fuel rods 18 are not shown for clarity. For clarity, only an exemplary one of the plurality of intermediate-length fuel-rods 20 and an exemplary one of the plurality of short-length fuel rods 22 are shown disposed within the channel 12. A perimeter wall 24, having approximately equal length sides 25 (best seen in reference to Figure 2), encompasses each of the fuel rods and the first and second water conduit 14 and 16, respectively.

Each fuel rod 17 and water conduit 14, 16 is supported as necessary by a lower support 26 connectably attached to the channel 12. At least one horizontal support member 27 is provided as necessary to support the fuel rods and the water conduits. A lower channel end 28 supports the fuel bundle 10 in a boiling water reactor vessel (not shown). Reactor coolant flowing through the boiling water reactor encounters an inlet surface 30 provided with an inlet aperture 32 disposed adjacent to the lower channel end 28. The reactor coolant enters the aperture 32 and flows vertically upward within the channel 12 in a channel flow direction B as shown. Reactor coolant is heated to form steam by contacting and longitudinally traversing each of the fuel rods of the fuel bundle 10. The steam discharges from an upper channel end 34 of the channel 12. A lifting member 36 is connectably attached to the upper channel end 34 to provide a mechanical lift point to install or remove each fuel bundle 10 from its location in a boiling water reactor.

Each of the fuel rods disposed within the channel 12 are arranged in a generally parallel configuration with each other fuel rod and with the first water conduit 14 and the second water conduit 16, respectively. The fuel rods are disposed such that they do not contact an inner perimeter wall 38 of the channel 12. In the embodiment shown, the first water passage 14 and the second water conduit 16 are disposed adjacent to a channel longitudinal centerline 40. Each full-length fuel rod 18 has a length C. The intermediate-length fuel rods 20 have a length D, which is less than the length of full-length fuel rods 18, but greater than 50% of the length of the full-length fuel rods 20. The short-length fuel rods 22 have a length E, which is less than the length of the intermediate-length fuel rods 20. As shown, the length C is less than 50% the length of the full-length fuel rods 18.

The fuel bundle illustrated in Fig. 1 is but one example of a plurality of possible fuel bundle designs. For example, the first water conduit 14 and the second water conduit 16 can be replaced by a single water conduit (not shown) generally centrally disposed about or adjacent to the longitudinal centerline 40. Each of the first water conduit 14 and the second water conduit 16 are shown having generally tubular shape, however, the invention is not limited to the geometry of the water conduit shape. Alternate water conduit shapes can be used including rectangular, oval, square, cruciform shapes and free-flowing (i.e., having no perimeter walls) water conduit shapes. Namely, a free-form water conduit is defined as a longitudinal void amongst the fuel rods.

The first water conduit 14, the second water conduit 16, each of the full-length fuel rods 18, each of the intermediate-lengths fuel rods 20, and each of the short-length fuel rods 22 are generally connected to the lower support 26 at each of a rod lower support end 41, which provides vertical support for these components. The one or more horizontal support members 27 are preferably spaced near a distal end 42 of either the short-length fuel rods 22 or the intermediate-length fuel rods 20, to provide vertical support for each of the fuel rods and the water conduits (having perimeter walls) within the channel 12. A plurality of designs are known for the horizontal support members 27, and each can vary depending on the quantity of fuel rods and/or water passages supported.

As best seen in Figures 2-4, an exemplary configuration of fuel rods including full-length fuel rods 18, intermediate-length fuel rods 20, and short-length fuel rods 22 are shown for an exemplary embodiment of the present invention. The fuel rods are disposed in a row-and-column configuration 43 having generally equivalent spacing between each adjacent pair of fuel rods. A portion of the total fuel rods in each fuel bundle 10 are removed to provide for the water conduits (e.g. the first water conduit 14, and the second water conduit 16). In the embodiment shown, each of the intermediate-length fuel rods 20 are installed as a first group 44. The first group 44 has intermediate-length fuel rods 20 grouped in pairs 45. Each of the pairs 45 of intermediate-length fuel rods 20 are located approximately mid-span along each inner perimeter wall 38. The row-and-column configuration 43 of the fuel rods is shown as a 10x10 configuration. It will be appreciated that a plurality of row-and-column configurations, including 8x8, 9x9, and other configurations of fuel rods can be used without departing from scope of the present invention.

The intermediate-length fuel rods 20 each preferably have a nominal length D of approximately 66% of the length C of any one of the full-length fuel rods 18. Each intermediate-length fuel rod 20 may range in length from approximately 60% to approximately 90% of the length C of any one of the full-length fuel rods 18. By positioning the intermediate-length fuel rods 20 immediately adjacent to an inner perimeter wall 38, a majority of the fuel normally disposed in a full-length fuel rod 18 is conserved in this outer perimeter of the fuel bundle 10.

Each of the short-length fuel rods 22 are arranged in a second group 46, second group 46 disposed generally inward from the inner perimeter wall 38. The second group 46 of short-length fuel rods 22 are further arranged into each of a rod subgroup 47 and a rod subgroup 48, each including an exemplary three short-length fuel rods 22. The rod subgroup 47 and the rod subgroup 48 are arranged in mirror image about the first water conduit 14 and the second water conduit 16, respectively. Each short-length fuel rod 22 preferably has a nominal length E of approximately 33% of the total length C of any one of the full-length fuel rods 18. The short-length fuel rods 22 may range in length between approximately 10% to approximately 40% of the length C of any one of the full-length fuel rods 18.

In an exemplary embodiment, a total fuel volume of the combined intermediate-length fuel rods 20 and the short-length fuel rods 22 is retained. This requires that an increase in the length of the intermediate-length fuel rods 20 be accompanied by a proportionate decrease in the length of the short-length fuel rods 22 and vice-versa.

Referring next to Figure 3, a section view looking upward and above the elevation of the short-length fuel rods 22 shows each of a plurality of voids 49. During a shut-down condition of the reactor, the voids 49 fill with water to form water traps which trap neutrons and improve the shutdown margin for the boiling water reactor. The first group 44 of intermediate-length fuel rods 20 are present at this elevation within the channel 12 and therefore do not contribute to the voids 49.

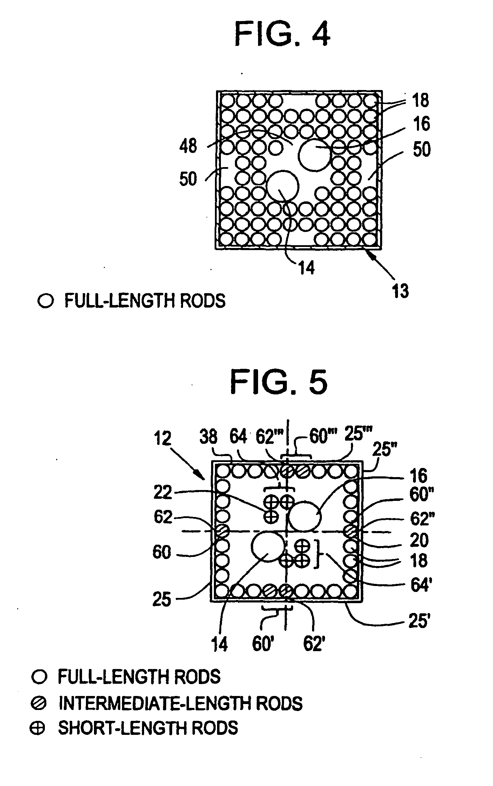

As best seen in Figure 4, a section view looking upward above both the intermediate-length fuel rods 20 and the short-length fuel rods 22 is shown. In addition to the voids 49 above the short-length fuel rods 22, a plurality of voids 50 are formed above each of the intermediate-length fuel rods 20. A combination of the voids 49 and the voids 50 provide a distributed volume of water in the fuel bundle 10 during a shut-down condition of the reactor, which absorbs neutrons and improves a shutdown margin for the boiling water reactor.

As shown in Figure 5, an alternate embodiment of the present invention provides an exemplary odd number (i.e., nine) of fuel rods, including full-length fuel rods 18 and intermediate-length fuel rods 20, positioned adjacent the inner perimeter wall 38 of channel 12, and short-length fuel rods 22 positioned approximate the first and second water conduits 14, 16 respectively. Only selected fuel rods are shown in Figure 5 for discussion purposes. The intermediate-length fuel rods 20 are arranged in four rod subsets 60, 60', 60", 60"', each having at least one intermediate-length fuel rod 20 positioned adjacent to a mid-span point 62, 62', 62", 62"', respectively, of the inner perimeter wall 38. The single (i.e., non-paired) intermediate-length fuel rods 20 can also be located (not shown) on any two adjacent sides (e.g., 25, 25') of channel 12 instead of on opposite sides 25, 25" as shown in Figure 5. The short length fuel rods 22 are arranged in two short length fuel rod subgroups 64 and 64', respectively, both disposed in mirror image about the water conduits 14 and 16. Each of the short length fuel rod subgroups 64 and 64' include an exemplary three short length fuel rods 22. The quantity of short length fuel rods 22 in each subgroup can vary from that shown, depending on the overall quantity and arrangement of fuel rods in channel 12.

The fuel bundle 10 of the present invention offers several advantages. By grouping the part-length fuel rods by length, as well as selectively positioning each group in the fuel bundle 10, an increased shut-down margin is provided. By disposing intermediate-length fuel rods 20 immediately adjacent to an inner perimeter wall of the channel, less fuel is removed from the perimeter of each fuel bundle. By controlling the length of the short-length fuel rods 22 of the present invention and optimizing their length with that of the intermediate-length fuel rods 20, steam-venting through the fuel bundle 10 may be prevented in an arrangement that provides increased water volume for water traps during a reactor shut-down condition. By dividing the part-length fuel rods into two lengths of fuel rods, the mass of fuel is retained while permitting a distribution of power through the fuel bundle 10. The power is distributed over the length of the channel more efficiently and a peak power is distributed over a broader length of the fuel bundle. Improved efficiency results from the distribution of power. Power distribution over the length of fuel rods (i.e., the length of the bundle) is also more evenly distributed using a combination of the short-length and intermediate-length fuel rods of the present invention compared to fuel rod arrangements known in the art.

## Claims

1. A fuel assembly for a boiling water reactor, comprising:
an elongated channel (12) having a perimeter wall (24) and a longitudinal center line (40);
an elongated fuel bundle comprising a plurality of fuel rods (17) longitudinally disposed in said channel (12);
wherein:
said plurality of fuel rods includes both full-length rods (18) and part-length rods (19);
wherein:
said part-length rods are separable into two groups with:
a first group (44) having intermediate-length rods (20) which have a length which is less than the length of the full length rods;
a second group (46) having short-length rods (22) which have a length which is less than the length of the intermediate-length rods;
**characterised in that**:
the intermediate-length rods (20) are disposed immediately adjacent to the inner surface of the channel perimeter wall (24); and
the short-length rods (22) are disposed approximate to the channel's longitudinal center line (40).

2. The fuel assembly of Claim 1, wherein said channel (12) comprises a square-shaped tube (13) having opposed open ends (28, 34) and equal-length sides (25).

3. The fuel assembly of Claim 2, wherein said fuel rods (17) are disposed in a row-and-column configuration (43) in said square-shaped tube (13), having equal spacing between adjacent ones of said fuel rods (17).

4. The fuel assembly of Claim 2, wherein said intermediate-length rods (20) comprise four rod pairs (45), each said pair (45) disposed approximately mid-span along one of said equal length sides (25).

5. The fuel assembly of Claim 1, comprising at least one water passage (14, 15) longitudinally disposed between said opposed open ends (28, 34) in said channel (12) and approximately parallel to said channel longitudinal centerline (40).

6. The fuel assembly of Claim 1, further comprising:
a pair of water passages (14, 16) disposed adjacent to said channel longitudinal centerline (40); and
said second group (46) of short-length rods (22) being further divisible into two rod subgroups (48, 49) each having three short-length fuel rods (22) disposed approximate to one of said pair of water passages (14, 16).

7. The fuel assembly of Claim 1:
said channel (12) further including a lower support member (26);
said plurality of fuel rods (17) each having a lower support end (41) and a distal end (42), said fuel rods (17) each connectably disposed at said lower support end (41) to said lower support member (26); and
said plurality of fuel rods (17) being supported from said channel (12) adjacent each said fuel rod distal end (42) by one of an upper channel end (34) and a plurality of horizontal support members (27).

## Patentansprüche

1. Brennelement für einen Siedewasserreaktor, aufweisend:
einen länglichen Kanal (12) mit einer Umfangswand (24) und einer Längsmittellinie (40);
ein längliches Brennstabbündel mit mehreren Brennstäben (17), die in Längsrichtung in dem Kanal (12) angeordnet sind;
wobei:
die mehreren Brennstäbe sowohl Volllängenstäbe (18) als auch Teillängenstäbe (19) enthalten;
wobei:
die Teillängenstäbe in zwei Gruppen aufteilbar sind, mit:
einer ersten Gruppe (44) mit Zwischenlängenstäben (20), welche eine Länge haben, welche kleiner als die Länge der Volllängenstäbe ist;
einer zweiten Gruppe (46) mit Kurzlängenstäben (22), welche eine Länge haben, welche kleiner als die Länge der Zwischenlängenstäbe ist;
**dadurch gekennzeichnet, dass**:
die Zwischenlängenstäbe (20) unmittelbar neben der Innenoberfläche der Kanalumfangswand (24) angeordnet sind; und
die Kurzlängenstäbe (22) nahe an der Längsmittellinie (40) des Kanals angeordnet sind.

2. Brennelement nach Anspruch 1, wobei der Kanal (42) ein quadratisch geformtes Rohr (13) mit gegenüberliegenden offenen Enden (28, 34) und gleichlangen Seiten (25) aufweist.

3. Brennelement nach Anspruch 2, wobei die Brennstäbe (17) in einer Reihen- und Spaltenstruktur (43) in dem quadratisch geformten Rohr (13) mit gleichem Abstand zwischen benachbarten Brennstäben (17) angeordnet sind.

4. Brennelement nach Anspruch 2, wobei die Zwischenlängenstäbe (20) vier Stabpaare (45) aufweisen, wobei jedes Paar (45) angenähert mittig entlang einer von den gleichlangen Seiten (25) angeordnet ist.

5. Brennelement nach Anspruch 1, das wenigstens einen Wasserdurchlass (14, 15) aufweist, der in Längsrichtung zwischen den gegenüberliegenden offenen Enden (28, 34) in dem Kanal (12) und angenähert parallel zu der Längsmittellinie (40) des Kanals angeordnet ist.

6. Brennelement nach Anspruch 1, ferner aufweisend:
ein Paar von Wasserdurchlässen (14, 16), die neben der Längsmittellinie (40) des Kanals angeordnet sind; und
wobei die zweite Gruppe (46) der Kurzlängenstäbe (22) weiter in zwei Stabuntergruppen (48, 49) mit jeweils drei Kurzlängen-Brennstäben (22) aufteilbar ist, die nahe an einem von dem Paar der Wasserdurchlässe (14, 16) angeordnet sind.

7. Brennelement nach Anspruch 1, wobei:
der Kanal (12) ferner ein unteres Unterstützungselement (26) enthält;
die mehreren Brennstäbe (17) jeweils ein unteres Unterstützungsende (41) und ein distales Ende (42) haben, wobei die Brennstäbe (17) jeweils an dem unteren Unterstützungsende (41) mit dem unteren Unterstützungselement (26) verbindbar angeordnet sind; und
die mehreren Brennstäbe (17) von dem Kanal (12) neben dem distalen Ende (42) jedes Brennstabs durch eines von einem oberen Kanalende (34) und von mehreren horizontalen Unterstützungselementen (27) unterstützt sind.

## Revendications

1. Assemblage combustible pour un réacteur à eau bouillante, comportant :
un canal (12) allongé, présentant une paroi périphérique (24) et un axe médian (40) longitudinal,
un faisceau de combustible allongé, comportant une pluralité de crayons combustibles (17) disposés dans le sens longitudinal dans ledit canal (12),
dans lequel
ladite pluralité de crayons combustibles comprend à la fois des crayons de pleine longueur (18) et des crayons de longueur partielle (19),
dans lequel
lesdits crayons de longueur partielle peuvent être séparés en deux groupes, avec:
un premier groupe (44) comportant des crayons de longueur intermédiaire (20) qui présentent une longueur qui est inférieure à la longueur des crayons de pleine longueur,
un deuxième groupe (46) comportant des crayons de longueur réduite (22) qui présentent une longueur qui est inférieure à la longueur des crayons de longueur intermédiaire,
**caractérisé en ce que**
les crayons de longueur intermédiaire (20) sont disposés à proximité immédiate de la surface interne de la paroi périphérique (24) du canal, et
les crayons de longueur réduite (22) sont disposés à proximité de l'axe médian (40) longitudinal du canal.

2. Assemblage combustible selon la revendication 1, dans lequel ledit canal (12) est constitué d'un tube (13) de forme carrée, présentant des extrémités (28, 34) opposées ouvertes et des côtés (25) d'égale longueur.

3. Assemblage combustible selon la revendication 2, dans lequel lesdits crayons combustibles (17) sont disposés dans une configuration de rangées et de colonnes (43) dans ledit tube (13) de forme carrée, en présentant des espacements égaux entre des crayons combustibles (17) adjacents.

4. Assemblage combustible selon la revendication 2, dans lequel lesdits crayons de longueur intermédiaire (20) sont constitués de quatre paires de crayons (45), chacune desdites paires(45) étant disposée à peu près à la moitié de la portée le long d'un desdits côtés (25) d'égale longueur.

5. Assemblage combustible selon la revendication 1, comportant au moins une conduite d'eau (14, 15), disposée dans le sens longitudinal entre lesdites extrémités (26, 34) opposées ouvertes, dans ledit canal (12), et à peu près parallèle audit axe médian (40) longitudinal du canal.

6. Assemblage combustible selon la revendication 1, comportant en outre :
une paire de conduites d'eau (14, 16) disposées de façon adjacente audit axe médian (40) longitudinal du canal, et
ledit deuxième groupe (46) de crayons de longueur réduite (22) pouvant en plus être divisé en deux sous-groupes (48, 49) de crayons, comprenant chacun trois crayons combustibles de longueur réduite (22) disposés à proximité de l'une des conduites de ladite paire de conduites d'eau (14, 16).

7. Assemblage combustible selon la revendication 1,
ledit canal (12) comportant en outre un élément de support inférieur (26),
ladite pluralité de crayons combustibles (17) présentant chacun une extrémité de support inférieure (41) et une extrémité distale (42), lesdits crayons combustibles (17) étant chacun disposés de manière à pouvoir être raccordés par ladite extrémité de support inférieure (41) audit élément de support inférieur (26), et
ladite pluralité de crayons combustibles (17) étant supportée par ledit canal (12), de façon adjacente à chacune desdites extrémités distales (42) de crayon combustible, par un élément parmi une extrémité de canal supérieure (34) et une pluralité d'éléments de support (27) horizontaux.
